# EUROPEAN PATENT APPLICATION

(11) **EP 2 631 438 A1**
(43) Date of publication of application: **28.08.2013**
(21) Application number: 10858666.0
(22) Date of filing: 22.10.2010
(51) Int. Cl.: F01K 23/06, B63H 21/06, B63H 21/16, B63H 23/20, B63H 23/30

(54) **PROPULSION DEVICE AND SHIP WITH SAME**

(71) Applicant: Mitsubishi Heavy Industries, Ltd., Tokyo 108-8215 (JP)
(72) Inventor: ICHIKI, Yoshihiro, Nagasaki-shi Nagasaki 850-8610 (JP); SHIRAISHI, Keiichi, Nagasaki-shi Nagasaki 850-8610 (JP)
(74) Representative: Henkel, Breuer & Partner
(86) International application number: PCT/JP2010/068758
(87) International publication number: WO 2012/053112

(57) **Abstract**

The purpose of the present invention is to provide a propulsion device and a ship with the propulsion device, the propulsion device generating a propulsion force while minimizing the loss of rotational energy obtained by a gas turbine and a vapor turbine. A propulsion device (1) having: a diesel engine (5) for driving a propeller shaft (3); a vapor generation device (6) for generating vapor by exhaust gas discharged from the diesel engine (5); a vapor turbine (7) driven by the vapor generated by the vapor generation device (6); and a gas turbine (8) driven by the exhaust gas discharged from the diesel engine (5). The rotational energy of the vapor turbine (7) and the gas turbine (8) is transmitted to the propeller shaft (3) through clutches (12, 13) and transmissions (10, 11).

## Description

### {Technical Field}

The present invention relates to a propulsion device and a marine vessel provided with the same and, more particularly, relates to a propulsion device to which rotation energy obtained by a gas turbine and a steam turbine is transmitted.

### {Background Art}

For the purpose of saving energy, marine vessels employ a combined-cycle power generation method in which steam is generated by guiding exhaust gas exhausted from a diesel engine to an exhaust-gas economizer, the steam turbine driven by the steam and the gas turbine driven by the exhaust gas exhausted from the diesel engine are disposed on the same shaft, and power is generated by a generator connected to the shaft. In the case where excess electrical energy is obtained through the combined-cycle power generation method, a propulsion device that urges a propulsion shaft with rotation energy converted from electrical energy is employed by using a shaft generator mounted on the propulsion shaft as a motor.

Patent Literature 1 discloses a propulsion device that transmits rotation energy obtained by driving a steam turbine to a propulsion shaft via a clutch and a speed reducer.
Patent Literature 2 discloses a propulsion device that transmits rotation energy obtained by driving a gas turbine to a propulsion shaft via a one-way clutch and a speed reducer.

### {Citation List}

### {Patent Literature}

{PTL 1} Japanese Examined Patent Application, Publication No. SHO-62-34598
{PTL 2} Japanese Unexamined Patent Application, Publication No. HEI-2-207139

### {Summary of Invention}

### {Technical Problem}

However, in a combined cycle, a gas turbine and a steam turbine are disposed on the same shaft and driven; thus, control for synchronizing the rotational speeds of the turbines is required. In the invention disclosed in Patent Literature 1, such control for synchronizing the rotational speeds is achieved through control using a speed governor. In the invention disclosed in Patent Literature 2, the control is achieved using a one-way clutch.
However, with the invention in Patent Literature 1, there is a disadvantage in that control devices, such as a speed governor and a control valve, are required.
With the invention in Patent Literature 2, there is a disadvantage in that the one-way clutch cannot be engaged/disengaged depending on the rotational speed.
Furthermore, there is a disadvantage in that loss due to energy conversion occurs because electrical energy acquired through the combined cycle in a conventional propulsion device is converted into rotation energy through a motor to drive the propulsion shaft.

An object of the present invention, which has been conceived in light of such circumstances, is to provide a propulsion device that obtains a propulsion force from rotation energy obtained by a gas turbine and a steam turbine with a small loss, as well as a marine vessel provided with such a propulsion device.

### {Solution to Problem}

To solve the problems described above, the propulsion device according to the present invention and the marine vessel provided with the same employ the following solutions.
Specifically, a propulsion device according to a first aspect of the present invention includes a diesel engine configured to drive a propulsion shaft; a steam generating device configured to generate steam with exhaust gas exhausted from the diesel engine; a steam turbine configured to be driven by the steam generated by the steam generating device; and a gas turbine configured to be driven by the exhaust gas exhausted from the diesel engine, wherein rotation energy of the steam turbine and the gas turbine is transmitted to the propulsion shaft via clutches and a transmission.

The rotation energy generated by the steam turbine and the gas turbine is mechanically transmitted to the propulsion shaft through the clutches and the transmission. Thus, a propulsion force can be obtained from the gas turbine and the steam turbine with a small energy loss compared with a case in which a propulsion force is obtained by driving the propulsion shaft with electrical energy converted from the rotation energy generated by the steam turbine and the gas turbine.

The clutches of the propulsion device according to the first aspect of the present invention are disposed between the steam turbine and the transmission and between the gas turbine and the transmission and engage or disengage depending on the rotational speed of each turbine.

Since the clutches are engaged/disengaged depending on the rotational speed of each turbine, the rotational speed of each turbine do not have to be in synchronization. Hence, the control of the propulsion device is facilitated. Furthermore, since synchronization devices and auxiliary facilities are not required, the installation cost can be reduced.
As such clutches, automatic engagement/disengagement clutches (also known as synchro-self shifting clutches, or SSS clutches) are suitably used, for example.
An automatic engagement/disengagement clutch joins an output shaft and an input shaft by engaging their teeth when the rotational speed of the output shaft reaches the rotational speed of the input shaft. If the rotational speed of the output shaft falls below the rotational speed of the input shaft, while the automatic engagement/disengagement clutch rotates in engagement, the engagement is automatically released to separate the output shaft and the input shaft.

A marine vessel according to a second aspect of the present invention is provided with the propulsion device described above.

Since the propulsion shaft is urged by the rotation energy of the steam turbine and the gas turbine, the output of the diesel engine can be reduced to improve fuel efficiency. Thus, the marine vessel can achieve a high effect in energy saving.

### {Advantageous Effects of Invention}

According to the present invention, since the rotation energy generated by a steam turbine and a gas turbine is mechanically transmitted to a propulsion device via clutches and a transmission, a propulsion force can be obtained by the gas turbine and the steam turbine with a small energy loss.

### {Brief Description of Drawings}

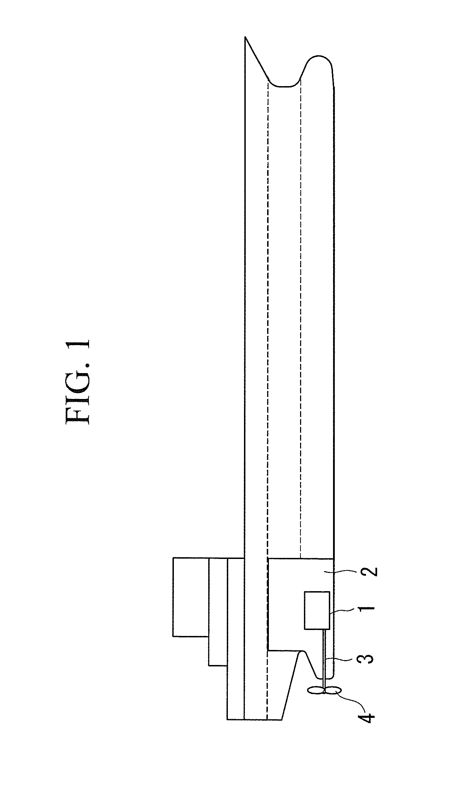

{Fig. 1}
   Fig. 1 is a longitudinal sectional view of a marine vessel depicting the position of a propulsion device according to an embodiment of the present invention.
{Fig. 2}
   Fig. 2 is a configuration diagram, in outline, of a propulsion device according to an embodiment of the present invention.

### {Description of Embodiments}

An embodiment of the present invention will be described below with reference to the drawings.
Fig. 1 is a longitudinal sectional view of a marine vessel in which a propulsion device according to this embodiment is installed.
In Fig. 1, the right side is the bow, and the left side is the stern. A propulsion device 1 is disposed below deck in an engine room 2 near the stern of the marine vessel. One end of a propulsion shaft 3 of the propulsion device 1 installed in the engine room 2 protrudes outboard, and a propeller 4 is fixed at the tip thereof.

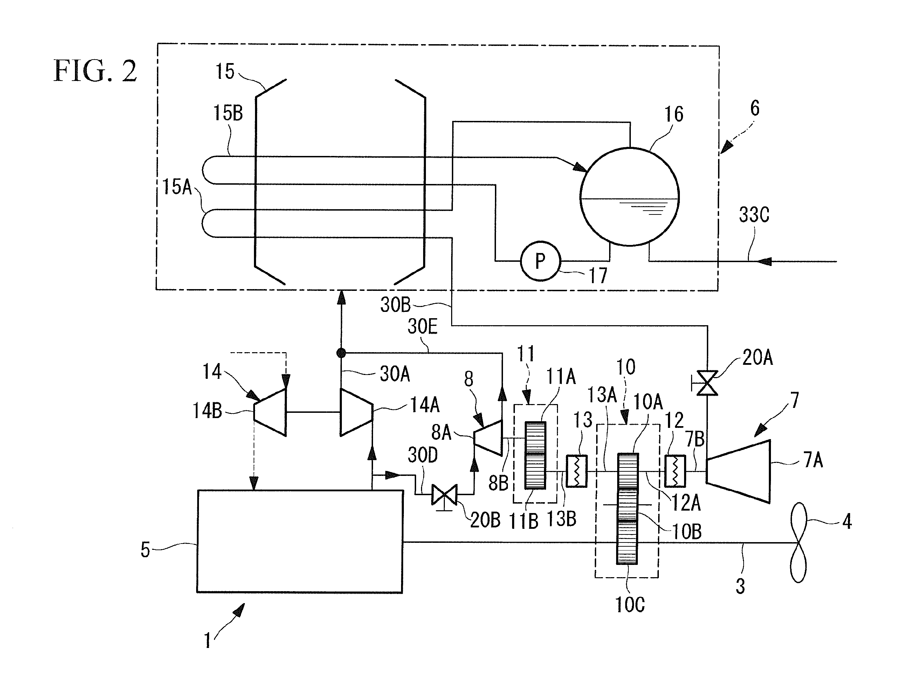

Next, the propulsion device 1 illustrated in Fig. 1 will be described in detail with reference to Fig. 2.
The propulsion device 1 includes a diesel engine 5, a steam generating device 6 that generates steam using high-temperature exhaust gas exhausted from the diesel engine 5, a steam turbine 7 driven by the steam, a gas turbine 8 driven by the exhaust gas exhausted from the diesel engine 5, speed reducers (transmissions) 10 and 11, automatic engagement/disengagement clutches (clutches) 12 and 13, and a propulsion shaft 3 driven by the diesel engine 5.

The diesel engine 5 includes a supercharger 14 and an exhaust-gas pipe 30A. The diesel engine 5 is directly connected to one end of the propulsion shaft 3 to rotationally drive the propulsion shaft 3. A propeller 4 is fixed to the other end of the propulsion shaft 3. The supercharger 14 provided on the diesel engine 5 includes a turbine 14A and a compressor 14B, both disposed on the same shaft. The turbine 14A is rotationally driven by the exhaust gas exhausted from the diesel engine 5. The driven turbine 14A rotates the compressor 14B disposed on the same shaft to compress air. The compressed air is supplied to the diesel engine 5.
An exhaust-gas branching pipe 30D branches from a section between the diesel engine 5 and the turbine 14A and is connected to the gas turbine 8. The downstream side of the turbine 14A is connected to an exhaust-gas economizer 15, which will be described below, through the exhaust-gas pipe 30A.

The steam generating device 6 is provided with the exhaust-gas economizer 15 and a steam separator 16. The exhaust-gas economizer 15 has, in its gas channel, a superheater 15A and an evaporator 15B. The superheater 15A and the evaporator 15B are mounted parallel to each other in this order from the bottom to the top inside the exhaust-gas economizer 15. High-temperature exhaust gas flows in the gas channel of the exhaust-gas economizer 15 and is discharged into the atmosphere through a funnel (not shown). The superheater 15A receives steam from the upper section of the steam separator 16. The evaporator 15B receives water from the lower section of the steam separator 16. Water and steam are separated and respectively retained in the lower section and the upper section inside the steam separator 16. The steam separator 16 receives water from a boiler-water circulating pipe 33C. The water inside the steam separator 16 is guided to the evaporator 15B in the exhaust-gas economizer 15 by a boiler-water circulating pump 17. Steam containing water from the evaporator 15B in the exhaust-gas economizer 15 is guided to the steam separator 16, where it is separated into water and steam. The separated steam is guided to the superheater 15A in the exhaust-gas economizer 15.

The steam turbine 7 includes a turbine 7A, a shaft 7B, and an open/close valve 20A. The turbine 7A is rotationally driven by steam to rotate the shaft 7B, which is connected to the turbine 7A. The open/close valve 20A disposed between the exhaust-gas economizer 15 and the steam turbine 7 shuts off the steam supplied from the superheater 15A in the exhaust-gas economizer 15 to the steam turbine 7 and does not require control other than opening/closing. The open/close valve 20A enters an OPEN state when the output of the diesel engine 5 reaches 50%.

The gas turbine 8 includes a turbine 8A, a shaft 8B, and an open/close valve 20B. The turbine 8A is rotationally driven by high-temperature exhaust gas to rotate the shaft 8B, which is connected to the turbine 8A. The open/close valve 20B is disposed on the exhaust-gas branching pipe 30D, which connects the diesel engine 5 and the gas turbine 8. The open/close valve 20B shuts off exhaust gas supplied from the diesel engine 5 to the gas turbine 8 and does not require control other than opening/closing. Normally, the open/close valve 20B is in an OPEN state. The outlet of the gas turbine 8 is connected to an exhaust-gas branching pipe 30E. The exhaust-gas branching pipe 30E merges with the exhaust-gas pipe 30A, which is connected to the outlet of the supercharger 14, and is connected to the exhaust-gas economizer 15.

Two speed reducers 10 and 11 are provided: the steam-turbine-side speed reducer 10 and the gas-turbine-side speed reducer 11.
The steam-turbine-side speed reducer 10 connects the two automatic engagement/disengagement clutches 12 and 13, which are described below, and the propulsion shaft 3. The steam-turbine-side speed reducer 10 is constituted of a first small gear 10A, a first large gear 10B, and a second large gear 10C, and the number of teeth increases in this order. The second large gear 10C is disposed on the propulsion shaft 3. The first small gear 10A has, on the two ends thereof, the output shaft 12A of the steam-turbine-side automatic engagement/disengagement clutch 12 and the output shaft 13A of the gas-turbine-side automatic engagement/disengagement clutch 13. The first large gear 10B, which is an intermediate gear, connects the first small gear 10A and the second large gear 10C.
The gas-turbine-side speed reducer 11 connects the gas turbine 8 and the gas-turbine-side automatic engagement/disengagement clutch 13. The gas-turbine-side speed reducer 11 is constituted of a small gear 11A and a large gear 11B. The small gear 11A is disposed on the shaft 8B, which is driven by the gas turbine 8. The large gear 11B is disposed on the input shaft 13B of the gas-turbine-side automatic engagement/disengagement clutch 13.

Two automatic engagement/disengagement clutches 12 and 13 are provided: one on the steam turbine 7 side and the other on the gas turbine 8 side. The automatic engagement/disengagement clutches 12 and 13 are also known as synchro-self shifting clutches, or SSS clutches, and join the output shafts 12A and 13A and the input shafts 7B and 13B by engaging their teeth when the rotational speed of the output shafts 12A and 13A reaches the rotational speed of the input shafts 7B and 13B. If the rotational speed of the output shafts 12A and 13A falls below the rotational speed of the input shafts 7B and 13B, while the automatic engagement/disengagement clutches 12 and 13 rotate in engagement, the engagement is automatically released to separate the output shafts 12A and 13A and the input shafts 7B and 13B.
The steam-turbine-side automatic engagement/disengagement clutch 12 is installed between the steam turbine 7 and the steam-turbine-side speed reducer 10. The steam-turbine-side automatic engagement/disengagement clutch 12 has the output shaft 12A and the input shaft 7B, which is driven by the steam turbine 7.
The gas-turbine-side automatic engagement/disengagement clutch 13 is installed between the steam-turbine-side speed reducer 10 and the gas-turbine-side speed reducer 11. The gas-turbine-side automatic engagement/disengagement clutch 13 has the output shaft 13A and the input shaft 13B, which is connected to the gas-turbine-side speed reducer 11.

Next, a summary of the operation of the propulsion device 1 illustrated in Fig. 2 will be provided.
When the diesel engine 5 starts to operate, the propulsion shaft 3 directly connected to the diesel engine 5, the propeller 4, and the steam-turbine-side speed reducer 10 disposed on the propulsion shaft 3 rotate.
The exhaust gas exhausted from the diesel engine 5 is guided to the exhaust-gas economizer 15 through the exhaust-gas pipe 30A. The exhaust gas exchanges heat with the superheater 15A and the evaporator 15B while passing through the exhaust-gas economizer 15. The water inside the evaporator 15B vaporizes into steam as a result of heat exchange with the exhaust gas. The steam is guided to the steam separator 16, where water is separated therefrom, and is then guided to the superheater 15A in the exhaust-gas economizer 15. The steam inside the superheater 15A is heated into superheated steam by exchanging heat with the exhaust gas. The superheated steam is guided to a superheated-steam pipe 30B. The superheated steam guided to the superheated-steam pipe 30B is supplied to the inlet of the steam turbine 7 through the open/close valve 20A. The steam turbine 7 is rotationally driven by the steam guided thereto. The rotation of the steam turbine 7 causes rotation of the input shaft 7B. The steam-turbine-side automatic engagement/disengagement clutch 12 is automatically engaged when the rotational speed of the output shaft 12A of the steam-turbine-side speed reducer 10, which is driven by the diesel engine 5, reaches the rotational speed of the input shaft 7B, which is driven by the steam turbine 7. As a result, the rotation energy of the steam turbine 7 is transmitted to the propulsion shaft 3 via the steam-turbine-side speed reducer 10.

Part of the exhaust gas exhausted from the diesel engine 5 is extracted before entering the supercharger 14 and guided in the exhaust-gas branching pipe 30D. The exhaust gas guided in the exhaust-gas branching pipe 30D is supplied to the inlet of the gas turbine 8 through the open/close valve 20B in an OPEN state. The gas turbine 8 is rotationally driven by the exhaust gas supplied thereto. The rotation of the gas turbine 8 causes rotation of the gas-turbine-side speed reducer 11 via the shaft 8B. The rotation of the gas-turbine-side speed reducer 11 causes rotation of the input shaft 13B, which is disposed between the speed reducer 11 and the gas-turbine-side automatic engagement/disengagement clutch 13.
After engagement of the steam-turbine-side automatic engagement/disengagement clutch 12, the gas-turbine-side automatic engagement/disengagement clutch 13 is automatically engaged when the rotational speed of the output shaft 13A of the steam-turbine-side speed reducer 10, which is driven by the diesel engine 5, reaches the rotational speed of the input shaft 13B connected to the gas-turbine-side automatic engagement/disengagement clutch 13 and the gas-turbine-side speed reducer 11. The engagement of the gas-turbine-side automatic engagement/disengagement clutch 13 causes mechanical coupling of the steam turbine 7, the exhaust gas turbine 8, and the propulsion shaft 3.

The steam-turbine-side automatic engagement/disengagement clutch 12 automatically disengages when the rotational speed of the output shaft 12A falls below the rotational speed of the input shaft 7B, disconnecting the steam-turbine-side speed reducer 11 and the steam turbine 7 and preventing the rotation energy of the steam turbine 7 from being transmitted to the propulsion shaft 3.
Similarly, the gas-turbine-side automatic engagement/disengagement clutch 13 automatically disengages when the rotational speed of the output shaft 13A falls below the rotational speed of the input shaft 13B, disconnecting the steam-turbine-side speed reducer 10 and the gas turbine 8 with the steam-turbine-side speed reducer 11 disposed therebetween, and preventing the rotation energy of the gas turbine 8 from being transmitted to the propulsion shaft 3.

As described above, the propulsion device according to this embodiment achieves the following advantageous effects.
The rotation energy generated by the steam turbine 7 and the gas turbine 8 is mechanically transmitted to the propulsion shaft 3 via the steam-turbine-side automatic engagement/disengagement clutch 12, the gas-turbine-side automatic engagement/disengagement clutch 13, the steam-turbine-side speed reducer 10, and the gas-turbine-side speed reducer 11. Thus, a propulsion force can be obtained from the gas turbine 8 and the steam turbine 7 with a small energy loss compared with a case in which a propulsion force is obtained by driving the propulsion shaft 3 with electrical energy converted from the rotation energy generated by the steam turbine 7 and the gas turbine 8.

The steam-turbine-side automatic engagement/disengagement clutch 12 and the gas-turbine-side automatic engagement/disengagement clutch 13 are engaged or disengaged depending on the rotational speeds of the turbines 7 and 8; thus, the rotational speeds of the turbines 7 and 8 do not have to be in synchronization. Hence, the control of the propulsion device 1 is simplified. Furthermore, since synchronization devices and auxiliary equipment are not required, the installation cost can be reduced.

Furthermore, since the propulsion shaft 3 is urged by the rotation energy of the steam turbine 7 and the gas turbine 8, the output of the diesel engine 5 can be reduced, improving fuel efficiency. Thus, the marine vessel can achieve a high energy-saving effect.

In this embodiment, a description has been given using an independent steam separator 16. However, the present invention is not limited thereto, and, instead, the steam separator 16 may also be used for a steam drum of a boiler.
As described in this embodiment, the open/close valve 20A on the steam turbine 7 side is controlled to enter an OPEN state when the output of the diesel engine 5 reaches 50%. However, the present invention is not limited thereto, and, instead, the open/close valve 20A may enter an OPEN state at a lower output, depending on the operating state of the marine vessel.
Furthermore, in this embodiment, a description has been given in which the steam-turbine-side speed reducer 10 is assumed to be a speed reducer including a two-gear mechanism, and the gas-turbine-side speed reducer 11 is assumed to be speed reducer including a single-gear mechanism. However, the present invention is not limited thereto, and, instead, any speed reducer may be used.

### {Reference Signs List}

- 1: propulsion device
- 3: propulsion shaft
- 5: diesel engine
- 6: steam generating device
- 7: steam turbine
- 8: gas turbine
- 10, 11: transmission
- 12, 13: clutch

## Claims

1. A propulsion device comprising:
a diesel engine configured to drive a propulsion shaft;
a steam generating device configured to generate steam with exhaust gas exhausted from the diesel engine;
a steam turbine configured to be driven by the steam generated by the steam generating device; and
a gas turbine configured to be driven by the exhaust gas exhausted from the diesel engine,
wherein rotation energy of the steam turbine and the gas turbine is transmitted to the propulsion shaft via clutches and a transmission.

2. The propulsion device according to Claim 1, wherein the clutches are disposed between the steam turbine and the transmission and between the gas turbine and the transmission and engage or disengage depending on the rotational speed of each turbine.

3. A marine vessel comprising:
the propulsion device according to Claim 1 or 2.
